(19) Europäisches Patentamt
European Patent Office
Office européen des brevets

(11) Publication number: **0 421 398 B1**

# (12) EUROPEAN PATENT SPECIFICATION

(45) Date of publication of patent specification: **13.07.94**   (51) Int. Cl.⁵: **G01C 19/56**

(21) Application number: **90118998.5**

(22) Date of filing: **04.10.90**

(54) **Vibratory gyroscope.**

(30) Priority: **03.10.89 JP 256946/89**
**19.10.89 JP 270366/89**

(43) Date of publication of application:
**10.04.91 Bulletin 91/15**

(45) Publication of the grant of the patent:
**13.07.94 Bulletin 94/28**

(84) Designated Contracting States:
**DE FR GB IT NL SE**

(56) References cited:
**EP-A- 0 298 511**
**US-A- 4 703 655**

**PATENT ABSTRACTS OF JAPAN, vol. 14, no.
353 (P-1086)[4296], 31st July 1990; & JP-A-2
129 514**

(73) Proprietor: **AKAI ELECTRIC CO., LTD.**
**No. 12-14, Higashi-Kojiya 2-chome**
**Ohta-ku Tokyo(JP)**

(72) Inventor: **Terajima, Kokichi c/o Akai Electric
Co.,Ltd.**
**12-14, Higashi-Kojiya 2-chome**
**Ohta-ku Tokyo(JP)**

(74) Representative: **Patentanwälte Grünecker,
Kinkeldey, Stockmair & Partner
Maximilianstrasse 58
D-80538 München (DE)**

## Description

### 1.BACKGROUND OF THE INVENTION

The present invention relates to a vibratory gyroscope which senses Coriolis Force for the purpose of detecting angular velocity.

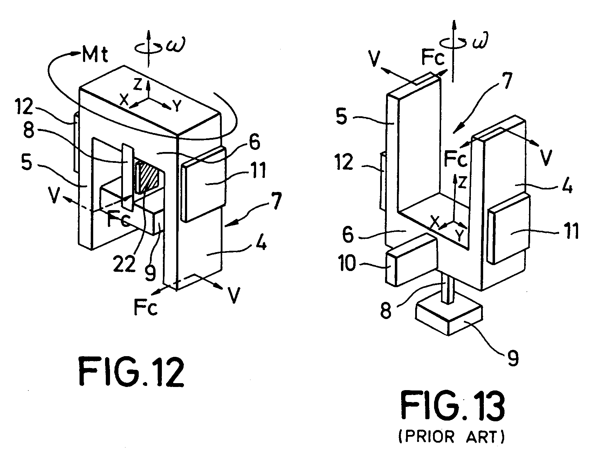

Figure 13 illustrates an example of a conventional type vibratory gyroscope in the XYZ coordinate system.

This kind of gyroscope provides a metal tuning fork 7 fixed on a base plate 9 through a support member 8, and a pickup memeber 10 protruded from the base member 6 in the direction of the X axis. The tuning fork is monolithically formed by a base member 6 and two arm members 4 and 5, in which the two arm members 4 and 5 in parallel extending in the direction of the Z axis and being separated with certain distance in the direction of the Y axis thereof abut the base member 6 at each lower end.

In the above vibratory gyroscope, it is known that Coriolis Force Fc is generated in each of the arm members 4 and 5 in the mutually opposite direction along with the X axis, when the arm members 4 and 5 are symmetrically vibrated with speed V in the direction of the Y axis by means of piezoelectric or magnetic elements, e.g., by means of application of alternative currents to piezoelectirc ceramics 11 and 12 and at the same time the tuning fork 7 is rotated about the Z axis with the angular velocity ω.

Since the speed V of the arm members 4 and 5 changes alternatively, the generated Coriolis Force is the force modulated by the number of the vibration of the arm members 4 and 5. The tuning fork 7 torsionally vibrates about the Z axis with respect to the base plate 9, the torsion angle being proportional to the Coriolis Force, which is ultimately proportional to the angular velocity.

This conventional device detects the magnitude of torsional vibration through piezoelectric or magnetic elements, using the pickup member 10 protruding in the direction of the X axis. For example, in case of detection by piezoelectric elements, the torsional vibration of the tuning fork 7 is developed to flexural vibration through the pickup member 10, and bimorph elements on the pickup member 10 produce electric charges according to the magnitude of the flexure, which electric charges are extracted as electric voltage.

However, in such a prior art system, there is a possibility that vibration of the arm members 4 and 5 produces undesired vibration of the base member 6 in the direction of the Y axis due to unbalance of weight and length between the two arm members 4 and 5, thereby causing the pickup member 10 to generate undesired detection signals including offsets, which offsets not only represent as if Coriolis Force is detected inspite of the fact that the angular velocity is zero, but also lower the signal to noise ratio of the detection signals and the detection sensitivity of the whole gyroscope system.

In accordance with a conventional method for reducing such offsets, measurement of the offset signal level is carried out before operation of the gyroscope system, and the detected signal level during the operation of the gyroscope system is then subject to correction based upon the measured offsets signal level. More specifically, before application of angular velocity to the gyroscope system, the output signals of the pickup member 10 are detected by a synchronous detector and then rectified to direct currents by a rectifier. Since the level of such direct currents represents the offset level, the ground level of the detection signals is changed based upon the level of such direct currents so that the offsets may be cancelled. However, it has been substantially unavoidable for such prior method to reduce the offsets sufficiently and effectively due to the drawback in that the sensitivity of the pickup member 10 slightly fluctuates depending upon temperature of the condition where the gyroscope is placed.

Additionally, according to the prior art, protrusion of the pickup member 10 in the direction of the X axis has inherent drawbacks in its complexity of construction, large size, and cost expensiveness.

From US-A-4 703 655 a gyroscope is known, which has a tuning fork and a detecting portion for detecting the moment generated by the Coriolis force. The detecting portion is formed of a rectangular shaped hinge with a pair of piezoelectric elements fixed to the hinge. The hinge with its piezoelectric elements extends in a direction perpendicular to the rotational axis.

EP-A-0 298 511 discloses a prior art gyroscope having a H-shaped vibrator and a support bar extending in a direction perpendicular to the rotational axis. Piezoelectric elements are provided on the support bar. Since the above mentioned prior art gyroscopes have support members extending in a direction perpendicular to the rotational axis, the prior art gyroscopes become large in size and complicated in construction.

Accordingly the principal object of the present invention is to provide a new vibratory gyroscope with improved performance in detection sensitivity.

A further object of the present invention to provide a new vibratory gyroscope with reduced size and simplified construction.

A further object of the present invention is to provide a new vibratory gyroscope with reduced offsets in its output signals.

A further object of the present invention is to provide a new vibratory gyroscope with improved signal to noise ratio in its output signals.

A further object of the present invention is to provide a new vibratory gyroscope with improved manufacturing efficiency.

A further object of the present invention is to provide a new vibratory gyroscope with improved manufacturing process.

A further object of the present invention is to provide a new vibratory gyroscope with reduced manufacturing costs.

A still further object of the present invention is to provide a new vibratory gyroscope with greater tolerance in size and weight of arm members of a tuning fork.

## 2.SUMMARY OF THE INVENTION

These and other objects are accomplished by means of the present invention which comprises a vibratory gyroscope system capable of detecting the Coriolis Force at a portion supporting a tuning fork thereof.

In the first type of embodiments, a support member of a tuning fork, which is made from piezoelectric material, by itself operates as a pickup member.

In the second type of embodiments, an independent support member is provided, on which at least one pickup member is fixed for detection of torsional moment of the support member.

In order to obtain detection signals from the thus provided pickup member, the piezoelectric material of the pickup member is polarized in the direction of the Z axis and electrodes of the pickup member are positioned in parallel with the Z axis, in which at least one of the electrodes is positioned aside to the direction perpendicular to the Z axis.

## 3.BRIEF DESCRIPTION OF THE DRAWINGS

Figure 1 is a perspective view of a first embodiment of a vibratory gyroscope according to the present invention.

Figure 2 is an illustration of a first embodiment of a pickup member for use in the first embodiment of the vibratory gyroscope.

Figure 3 is an illustration of a second embodiment of a pickup member for use in the first embodiment of the vibratory gyroscope.

Figure 4 is an illustration of a third embodiment of a pickup member for use in the first embodiment of the vibratory gyroscope.

Figure 5 is an illustration of a fourth embodiment of a pickup member for use in the first embodiment of the vibratory gyroscope.

Figure 6 is a front view of a vibratory gyroscope representing influence of unbalance of two arm members of the tuning fork.

Figure 7 is a perspective view of a second embodiment of a vibratory gyroscope according to the present invention.

Figure 8 is a perspective view of a third embodiment of a vibratory gyroscope according to the present invention.

Figure 9 is an illustration of a fifth embodiment of a pickup member for use in the third embodiment of the vibratory gyroscope.

Figure 10 is a perspective view of a fourth embodiment of a vibratory gyroscope according to the present invention.

Figure 11 is an illustration of a sixth embodiment of a pickup member for use in the fourth embodiment of the vibratory gyroscope.

Figure 12 is a perspective view of a fifth embodiment of a vibratory gyroscope according to the present invention.

Figure 13 is a perspective view of an example of a vibratory gyroscope according to the prior art.

Figures 14 through 17 are illustrations for explaining principle and operation of the present invention.

## 4. DETAILED DESCRIPTION OF PREFERRED EMBODIMENTS

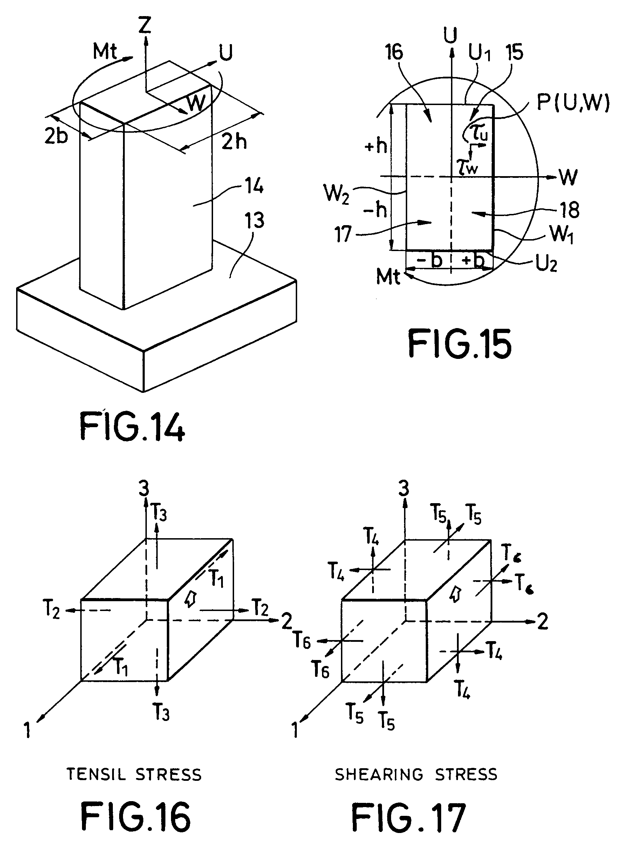

Figure 14 illustrates a column-like member 14, which is protruded from the support 13 in the direction of the Z axis and shaped a rectangular parallelepiped. Assuming that the sectional size of the member 14 is 2b x 2h, the shearing stress at an arbitrary point P(u, w) is given with respect to the direction of the U axis $\tau_w$ and the W axis $\tau_u$ as follows:

$$\tau_w = \frac{9}{16} \cdot \frac{Mt}{\ell^2 h} \cdot \frac{1}{b} \left[ 1 - \left( \frac{u}{h} \right)^2 \right] W \quad \cdots \quad \cdots \quad (1)$$

$$\tau_u = \frac{9}{16} \cdot \frac{Mt}{\ell^2 h} \cdot \frac{b}{h^2} \left[ 1 - \left( \frac{w}{b} \right)^2 \right] u \quad \cdots \quad \cdots \quad (2)$$

By the way, when stress T and electric field E are applied to piezoelectric material, the electric displacement D produced therein is generally expressed by the following equation:

$$\begin{bmatrix} D_1 \\ D_2 \\ D_3 \end{bmatrix} = \begin{bmatrix} d_{11} d_{12} d_{13} d_{14} d_{15} d_{16} \\ d_{21} d_{22} d_{23} d_{24} d_{25} d_{26} \\ d_{31} d_{32} d_{33} d_{34} d_{35} d_{36} \end{bmatrix} \begin{bmatrix} T_1 \\ T_2 \\ T_3 \\ T_4 \\ T_5 \\ T_6 \end{bmatrix} + \begin{bmatrix} \varepsilon_{11} & \varepsilon_{12} & \varepsilon_{13} \\ \varepsilon_{21} & \varepsilon_{22} & \varepsilon_{23} \\ \varepsilon_{31} & \varepsilon_{32} & \varepsilon_{33} \end{bmatrix} \begin{bmatrix} E_1 \\ E_2 \\ E_3 \end{bmatrix} \quad \cdots \quad (3)$$

wherein $d_{11}$-$d_{36}$ and $\varepsilon_{11}$-$\varepsilon_{33}$ represent piezoelectric constants and dielectric constants, respectively.

In case that the piezoelectric material is lead zirconate titanate and only stress T is applied thereto, the above equation can be expressed as follows:

$$\begin{bmatrix} D_1 \\ D_2 \\ D_3 \end{bmatrix} = \begin{bmatrix} 0 & 0 & 0 & 0 & d_{15} & 0 \\ 0 & 0 & 0 & d_{15} & 0 & 0 \\ d_{31} & d_{32} & d_{33} & 0 & 0 & 0 \end{bmatrix} \begin{bmatrix} T_1 \\ T_2 \\ T_3 \\ T_4 \\ T_5 \\ T_6 \end{bmatrix} \quad \cdots \cdots (4)$$

wherein the stress $T_1$-$T_6$ is applied to the direction shown in Figures 16 and 17, and the piezoelectric material is polarized in the direction of the 3 axis as shown by the arrow.

The above equation means that the electric displacement D1 in the direction of the 1 axis is given as:

$$D_1 = d_{15} T_5 \quad (5)$$

when an electrode is provided on the surface perpendicular to the 1 axis This means that such provision operates as a pickup member generating electric charges with respect to $T_5$, the shearing stress about the 1 axis, only and having no sensitivity with respect to stress from other direction, $T_1$, $T_2$, $T_3$, $T_4$, $T_6$.

Accordingly, assuming that the column-like member 14 shown in the Figure 14 is a piezoelectric material polarized in the direction of the Z axis, the electric displacement at the point P(u, w) is given as follows, using the equations (1), (2), and (5):

$$D_w = \frac{9}{16} \cdot \frac{Mt}{t^2 h} \cdot \frac{d_{15}}{t}\left[1 - \left(\frac{u}{h}\right)^2\right]w \quad \cdots \quad (6)$$

$$D_u = \frac{9}{16} \cdot \frac{Mt}{t^2 h} \cdot \frac{t d_{15}}{h^2}\left[1 - \left(\frac{w}{t}\right)^2\right]u \quad \cdots \quad (7)$$

wherein $D_w$ and $D_u$ are electric displacement in the direction of the U axis and that of W axis, respectively.

Meanwhile, as shown in the equations (1),(2),(6), and (7), respective shearing stress $\tau_w$, $\tau_u$ as well as respective electric displacement $D_w$, $D_u$ have mutually opposite polarity on the first and the third quadrants 15 and 17, or on the second and the fourth quadrants 16 and 18. This means that no electric displacement $D_w$ arises and therefore no electric charge is generated in case that electrodes are formed only on the entire surface of $u_1$ and $u_2$ in Figure 15, which are perpendicular to the U axis. Similarly, no electric charge is generated in case that electrodes are formed only on the entire surface of $w_1$ and $w_2$, which are perpendicular to the direction of the W axis.

In the first type of embodiments according to the present invention, a support member of a tuning fork by itself operates as a pickup member, and at least one of the electrodes provided on the mutually opposite side in parallel with the Z axis is positioned aside to the direction perpendicular to the Z axis so that electric charges may be generated through appearance of electric displacement, e.g., at least one of the electrodes provided on the surface $w_1$, $w_2$ is positioned aside to the surface $u_1$ or $u_2$. More preferably, electrodes are formed aside from the center of the surface $w_1$ or $w_2$ for the purpose of effective generation of electric displacement $D_u$.

In the figures in this specification, identical reference numerals are used with respect to portions which are similar to those in the prior art.

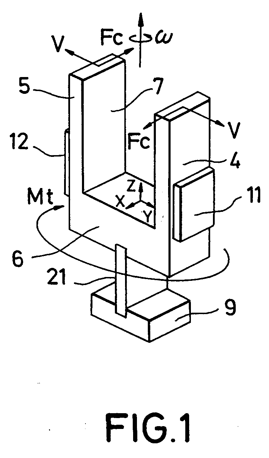

Referring now to Figure 1, a tuning fork 7 consists of two arm members 4 and 5, and a base member 6, in which the arm members 4 and 5 extend in parallel in the direction of the Z axis and are separated with certain distance in the direction of the Y axis, and each lower end of the arm members 4 and 5 monolithically abuts the base member 6, From the lower surface of the base member 6, a pickup member 21 is protruded with its end being fixed on the support 9.

Thus constructed vibratory gyroscope has an advantage in that the provision of the pickup member 21 which also serves for the support member 8 of the prior art example not only simplifies the manufacture and structure thereof but also reduces the size and the cost thereof. Furthermore, the gyroscope according to the present invention effectively prevents undesired vibration in the direction of the Y axis due to unbalance of weight and length of the two arm members from giving influence to the detection signal without specific signal processing means, thereby improving detection sensitivity, since the pickup member 21 detects torsional moment Mt thereof arising from Coriolis Force.

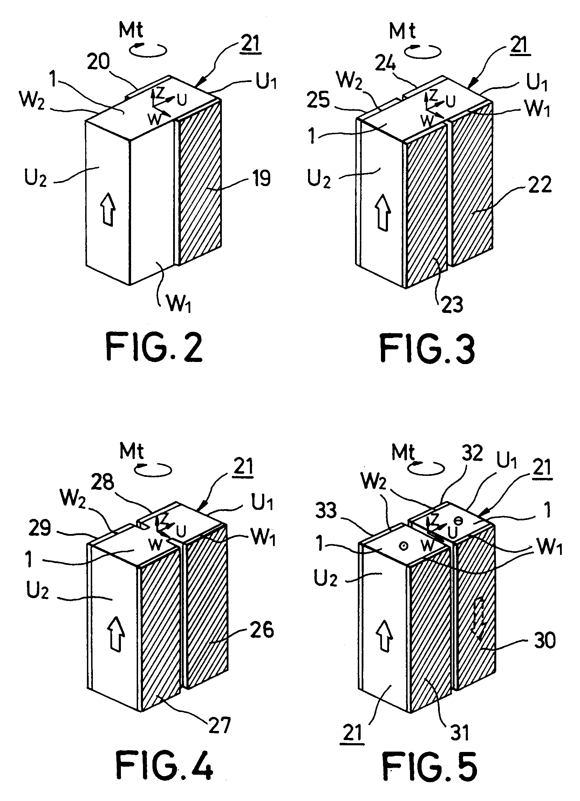

Figure 2 illustrates the pickup member 21 with the UWZ coordinate system. In order to detect the torsional moment Mt, the pickup member 21 is made from a piezoelectric material polarized in the direction of the Z axis, the electrodes 19 and 20 respectively provided on the surfaces $w_1$ and $w_2$ perpendicular to the W axis being positioned aside to one of the surfaces $u_1$, $u_2$ perpendicular to U axis, i.e. $u_1$. With this construction, it is possible to detect electric displacement Du within the region between the electrodes 19 and 20 arising from the torsional moment Mt.

In the example shown in Figure 2, the two electrodes 19 and 20 may be positioned aside to the surface $u_2$, or one of the electrodes 19 and 20 may be formed on the entire surface of $w_1$ or $w_2$.

In the embodiment shown in Figure 3, the pickup member 21 provides electrodes 22, 23, 24, 25 on the surfaces $w_1$, $w_2$, the two electrodes 22 and 24 being positioned aside to the surface $u_1$ and the two electrodes 23 and 25 being positioned aside to the surface $u_2$, respectively. In this embodiment, the pair of electrodes 22 and 25 produces electric charges with mutually opposite polarity of the pair of electrodes 23 and 24, in response to the application of torsional moment Mt.

Electrodes shown in Figures 2 and 3 can be formed through vacuum deposition process or chemical plating process which forms conductive layer on the piezoelectric material, and the following photoetching process. Electrodes may also be formed by other method used in the manufacture of semiconductor devices, such as the lift-off method.

In the pickup member 21 shown in Figure 4, electrodes formed on the entire surfaces $w_1$ and $w_2$ are divided into four electrodes 26, 27, 28, and 29 by forming a groove in the direction of the Z axis, with certain depth approximately in the center of the respective surfaces $w_1$ and $w_2$ through a precision cutter or a similar machine. The pair of electrodes 26 and 29 produces electric charges with mutually opposite polarity of the pair of electrodes 27 and 28, in response to the application of the torsional moment Mt. In this embodiment, productivity of the pickup member 21 is effectively improved because of processing of cutting of the piezoelectric material is carried out simultaneously with the division process of the electrodes.

The pickup member 21 shown in Figure 5 consists of two pieces of the piezoelectric material 1, which are polarized mutually opposite direction and are in parallel positioned in the direction of the U axis with certain distance. The electrodes 30 and 31 are provided on the surface $w_1$ and the electrodes 32 and 33 are provided on the surface $w_2$, respectively. In response to the application of the torsional moment Mt to this structure, both electrodes 30 and 31 on the surface $w_1$ generate electric charges with the same polarity and the electrodes 32 and 33 generate electric charges with reversed polarity with respect to the electrodes 30 and 31.

Since, in this structure, two neighboring electrodes generate electric charges with the same polarity, lead wires to be fixed on each electrodes do not cross each other and the assembly of the gyroscope is simplified.

Although all of the above-described examples are constitued to dectect the electric displacement $D_u$, detection of electric displacement $D_w$ is also possible by forming electrodes on the surfaces $u_1$ and $u_2$ in the same manner as mentioned before.

In case of application of such pickup member to the gyroscope shown in Figure 1, direction of the Z axis in the tuning fork should coincide with the direction of the Z axis of the pickup member 21, which supports the tuning fork 7. However, directions of the X axis and the Y axis in the XYZ coordinate system do not necessarily coincide with directions of the U axis and the W axis in the UWZ coordinate system.

The vibratory gyroscope shown in the above embodiments vibrates in the same manner as the one referred to in the prior art. In other words. Coriolis Force Fc is generated in the respective arm members 4 and 5 in the direction of the X axis, when alternative currents are applied to the dirve electrodes 11 and 12 to make the two arm members 4 and 5 vibrate symmetrically in the direction of the Y axis.

Accordingly, thus generated Coriolis Force Fc makes the tuning fork 7 torsionally vibrate about the Z axis with respect to the support 9. However, it should be noted that in the above-mentioned embodiments torsional moment Mt acting to the pickup member 21 is detected by itself for the purpose of obtaining Coriolis Force Fc.

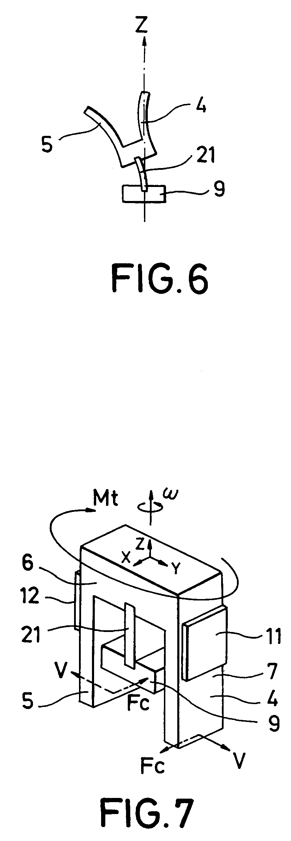

In a conventional gyroscope, existence of unbalance of weight and length in the two arm members 4 and 5 is susceptible to produce torsional vibration in the pickup member 21 as shown in Figure 6. On the other hand, since a gyroscope according to the present invention is in principle insensitive to the stress caused by flexural deformation as sbown in tbe equation (5), wider tolerance on balance of weight and length of the arm members 4 and 5 can be accepted in case of design, so that the manufacturing effect may be improved, particularly in case of mass production. Our experiments indicated that the pickup member 21 shown in Figure 4 of the present invention lowered offset level approximatelv 30 dB in comparison with the conventional pickup member in which bimorph elements are provided as shown in the prior art.

Furthermore, the gyroscope according to the present invention requires no separate pickup member protruding from the base member 6 in the direction of the X axis. This not only sufficiently eliminates the space in the direction of the X axis to reduce the size of the whole device, but also simplifies the structure to effectively reduce the assemble process in the manufacture thereof.

Figure 7 shows the perspective view of the further embodiment according to the present invention. In this embodiment, the tuning fork 7 is provided with upended position of the embodiments shown before and the pickup member 21 and the support 9 are positioned between the respective arm members 4 and 5, in order to reduce the space in the direction of the Z axis. The pickup member 21 operates in the same principle as mentioned before and brings out the same effect as the embodiments mentioned hereinbefore.

Although each of the embodiments shown in Figures 1 and 7 comprises the pickup member 21 which also serves for the support member 8, the present invention may be made in the different manner in which the support member 8 is provided in the same manner as the prior art, and a separate piezoelectric material polarized in the direction of the Z axis is fixed on the side wall of the support member 8. With this construction, the piezoelectric material produces electric displacement in response to shearing stress in the direction of the U axis or the W axis, depending upon the surface fixed on the support member 8, as shown in the equation (5).

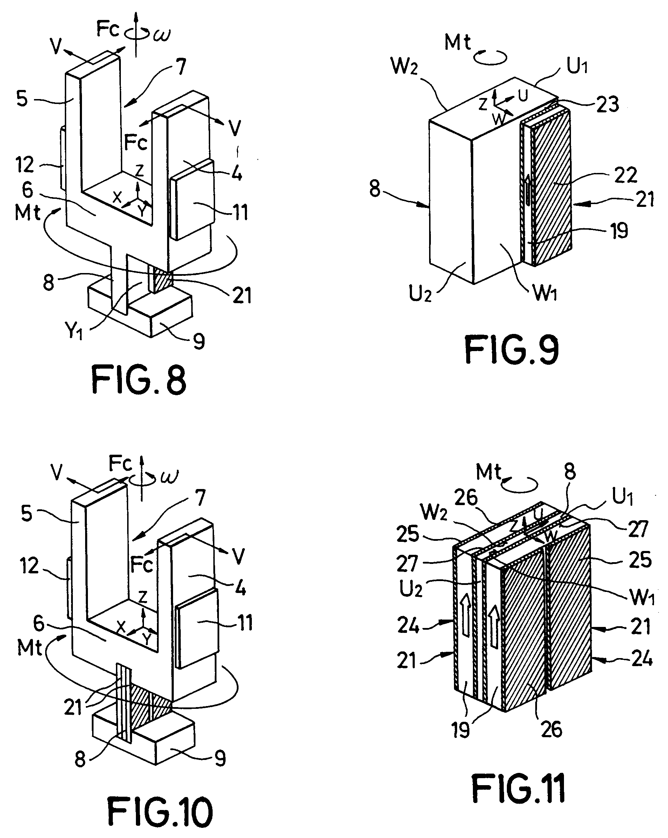

As mentioned before, the equation (5) means that no electric displacement arises and therefore no electric charge is generated in the electrode in response to shearing stress $\tau_w$ in case that piezoelectric material is fixed only on the entire surfaces of $u_1$ and $u_2$ in Figure 10, which are perpendicular to the U axis. Similarly, no electric charge is generated in the electrodes in response to shearing stress $\tau_u$ in case that piezoelectric material is fixed only on the entire surface of w1 and w2, which are perpendicular to the W axis. Accordingly, for generation of electric displacement, pickup member made from piezoelectric material and polarized in the direction of the Z axis should be:

(1)fixed on at least one of the surface $w_1$ or $w_2$, with being positioned aside to the surface $u_1$ or $u_2$

or

(2)fixed on at least one of the surfaces $u_1$ or $u_2$, with being positioned aside to the surface $w_1$ or $w_2$.

For the purpose of effective generation of electric displacement, the pickup member is preferably fixed aside to the half surface from the center of the width of the surface $w_1$ or $w_2$, or of the surface $u_1$ or $u_2$.

In the above-mentioned type of embodiments, fixing of the pickup member to the support member enhances mechanical durability of the pickup member, thereby protecting the pickup member from damage by mechanical shock.

In Figure 8, the tuning fork 7 is constructed same as that shown in Figure 1, provided that the support member 8 supports the tuning fork 7 on the base plate 9. In this embodiment, the pickup member 21 is fixed on the surface y1 of the support member 8, which is perpendicular to the Y axis, with being positioned aside in the direction of the X axis. With this construction, the pickup member 21 detects torsional moment Mt arising from Coriolis Force and acting to the support member 8.

As shown in Figure 9 with UWZ coordinate system, such pickup member 21 is made from a piezoelectric material of rectangular parallelepiped, being polarized in the direction of the Z axis and having two electrodes 22 and 23 on the two opposite surfaces perpendicular to the W axis. The pickup member 21 is fixed on the surface $w_1$ perpendicular to the W axis, of the support member 8 preferably made of resilient material with being positioned aside to the surface u1. Such allocation of the pickup member 21 causes the electrodes to generate electric charges in response to the shearing stress in the direction of the W axis arising from torsinal moment Mt and acting to the support member 8. Accordingly, this enables the pickup member 21 to detect torsional moment Mt acting to the support member 8 and arising from Coriolis Force Fc.

By the way, the gyroscope shown in Figure 8 does not need to monolithically consist of the two arm members 4 and 5, the base member 6, and the support member 8, but may be a mutually connected construction. Furthermore, the surface on which the pickup member 21 is to be fixed is not limited to the surface shown in Figures 8 and 9. For example, the pickup member 21 in Figure 9 may be positioned aside to the surface $u_2$, or instead of the pickup member 22 on $w_1$ or in addition thereto, further pickup member 21 may be fixed on the surface $w_2$, or two pickup members 21 may be fixed mutually in parallel on each surfaces $w_1$ and $w_2$. It will be understood that this kind of modification may be applicable when the pickup member is fixed on the surface(s) $u_1$ and/or $u_2$.

Figure 10 illustrates further example according to the present invention. In this example, the support member 8 made by a plate-like material provides two pickup members 21 on each surface perpendicular to the Y axis. As shown in Figure 11 with the UWZ coordination system, each pickup member 21 provides the piezoelectric material 19 extending along with the support member 8 and having the substantially same width as that of the support member. Such piezoelectric material 19, which is polarized in the direction of the Z axis, has two electrodes 24 and 27 respectively on each surface perpendicular to the W axis, one of each electrodes 24 is divided into two small electrodes 25 and 26. The support member 8 is sandwiched between the two pickup members 21 on respective surfaces $w_1$ and $w_2$ of the supports perpendicular to the W axis, and this construction is similar to a bimorph element in which two general type of piezoelectric elements hold a resilient plate therebetween. Accordingly in case that the pickup member 21 is thus applied to the gyroscope shown in Figure 10, it operates in the same manner as that shown in Figure 8.

In the embodiment shown in Figure 11, two pairs of two small electrodes 25 and 26 diagonally positioned with respect to the support member 8 generates electric charges with mutually opposite polarity, in response to the action of the torsional moment Mt.

Additionally, in the pickup member 21 shown in Figure 11, only the electrodes 27 neighboring the support member 8 may be divided into two small electrodes, or both of the electrodes 24 and 27 may be divided in two electrodes.

Furthermore, use can be made when the pickup member is fixed on only one side of the surface of the support member 8 perpendicular to the W axis, or when the pickup member is fixed on at least one of the surfaces $u_1$ and $u_2$ perpendicular to the U axis in Figure 11. In the latter case, the pickup member 21 generates electric charges in response to shearing stress $\tau_w$ applied to in the direction of the U axis.

Figure 12 is the further embodiment according to the present invention, in which the tuning fork is provided with upended position, similar to that shown in Figure 7, and the pickup member is fixed on the support member 8 protruded between the two arm members

## Claims

1. Vibratory gyroscope comprising
   a tuning fork (7) having two arm members (4, 5) and a base member (6), the two arm members being parallel to each other and extending in the direction of a Z-axis and being separated from each other by a certain distance in the direction of a y-axis, and the base member connecting the two arm members at their end portions;
   a support member means (8) for supporting the tuning fork (7);
   at least one pickup member means (21) provided on at least one surface of the support member means, wherein the pickup member means includes piezoelectric material and at least a pair of electrodes on respective surfaces, at least one of said electrodes being fixed on the support member and being displaced with respect to the Z-axis to be positioned aside to one of the two directions perpendicular to the Z-axis,
   the vibratory gyroscope being **characterized by**
   the support member protruding from the base member in the direction of the Z-axis; and
   the piezoelectric material being polarized in the direction of the Z-axis.

2. Vibratory gyroscope according to claim 1 characterized in that the pickup member means (21) serves as the support member means (8).

3. Vibratory gyroscope according to claim 1 or 2 characterized by the piezoelectric material (19) having substantially the same width as the support member (8); and by at least one of the electrodes (24; 27) being divided into two portions (25, 26) in the direction perpendicular to the Z-axis and at least one of the electrodes being fixed on the support member means.

## Patentansprüche

1. Schwingungsgyroskop mit
   einer Abstimmgabel (7), die zwei Armelemente (4, 5) und ein Basiselement (6) hat, wobei die zwei Armelemente parallel zueinander sind und sich in der Richtung einer Z-Achse erstrecken und in der Richtung einer Y-Achse eine bestimmte Distanz voneinander getrennt sind, und wobei das Basiselement die zwei Armelemente an ihren Endabschnitten verbindet;
   einer Halteelementeinrichtung (8) zum Halten der Abstimmgabel (7);
   mindestens einer Aufnahmeelementeinrichtung (21), die auf mindestens einer Oberfläche der Halteelementeinrichtung vorgesehen ist, wobei die Aufnahmeelementeinrichtung ein piezoelektrisches Material und mindestens ein Elektrodenpaar auf den entsprechenden Oberflächen enthält, wobei mindestens eine der Elektroden auf dem Halteelement befestigt ist und in Bezug auf die Z-Achse versetzt ist, um in einer der zwei Richtungen senkrecht zur Z-Achse seitlich plaziert zu sein, wobei das schwingungsgyroskop **dadurch gekennzeichnet** ist, daß
   das Halteelement vom Basiselement aus in die Richtung der Z-Achse hervorsteht, und daß
   das piezoelektrische Material in der Richtung der Z-Achse polarisiert ist.

2. Schwingungsgyroskop gemäß Anspruch 1, **dadurch gekennzeichnet**, daß die Aufnahmeelementeinrichtung (21) als Halteelementeinrichtung (8) dient.

**3.** Schwingungsgyroskop gemäß Anspruch 1 oder 2, **dadurch gekennzeichnet**, daß

das piezoelektrische Material (19) im wesentlichen die gleiche Breite wie das Halteelement (8) hat, und daß

wenigstens eine der Elektroden (24; 27) in der Richtung senkrecht zur Z-Achse in zwei Abschnitte (25, 26) geteilt ist und wenigstens eine der Elektroden auf der Halteelementeinrichtung befestigt ist.

**Revendications**

**1.** Gyroscope vibratoire comprenant

un diapason (7) ayant deux éléments bras (4, 5) et un élément base (6), les deux éléments bras étant parallèles entre eux et s'étendant dans la direction d'un axe Z et étant séparés l'un de l'autre par une certaine distance dans la direction d'un axe y et l'élément base réunissant les deux éléments bras par leurs parties extrémités ;

un moyen formant élément support (8) pour supporter le diapason (7) ;

au moins un moyen formant élément capteur (21) disposé sur au moins une surface du moyen formant élément support, dans lequel le moyen formant élément capteur comprend un matériau piézoélectrique et au moins une paire d'électrodes sur les surfaces respectives, au moins l'une desdites électrodes étant fixée sur l'élément support et étant déplacée par rapport à l'axe Z pour être positionnée à côté de l'une des deux directions perpendiculaires à l'axe Z,

le gyroscope vibratoire étant caractérisé par

l'élément support faisant saillie depuis l'élément base dans la direction de l'axe Z ; et

le matériau piézoélectrique étant polarisé suivant la direction de l'axe Z.

**2.** Gyroscope vibratoire selon la revendication 1, caractérisé en ce que le moyen formant élément capteur (21) sert de moyen formant élément support (8).

**3.** Gyroscope vibratoire selon la revendication 1 ou 2, caractérisé en ce que le matériau piézoélectrique (19) a sensiblement la même largeur que l'élément support (8) ; et en ce qu'au moins l'une des électrodes (24 ; 27) est divisée en deux parties (25, 26) suivant la direction perpendiculaire à l'axe Z et au moins l'une des électrodes est fixée sur le moyen formant élément support.

FIG.1

FIG.2

FIG.3

FIG.4

FIG.5

FIG.6

FIG.7

**FIG. 8**

**FIG.9**

**FIG.10**

**FIG.11**

FIG.12

FIG.13
(PRIOR ART)

FIG.14

FIG.15

TENSIL STRESS

FIG.16

SHEARING STRESS

FIG.17